# FASCICULE DE BREVET EUROPEEN

(11) **EP 3 463 737 B1**
(45) Date de publication et mention de la délivrance du brevet: **01.07.2020**
(21) Numéro de dépôt: 17752160.6
(22) Date de dépôt: 15.05.2017
(51) Int. Cl.: B23K 15/00, B23K 31/02, B64D 29/06, F01D 9/04, F01D 25/16, F01D 25/24, B23K 101/00

(54) **CARTER D'ECHAPPEMENT DE TURBOMACHINE ET SON PROCEDE DE FABRICATION**
TURBOMASCHINENABGASGEHÄUSE UND VERFAHREN ZUR HERSTELLUNG DAVON
TURBOMACHINE EXHAUST CASING AND METHOD OF MANUFACTURING THE SAME

(30) Priorité: 26.05.2016 FR 1654734
(43) Date de publication de la demande: 10.04.2019
(73) Titulaire: Safran Aircraft Engines, 75015 Paris (FR)
(72) Inventeur: DEBRAY, Benoit, Argémiro, Matthieu, 77550 MOISSY-CRAMAYEL (FR); FOUQUET, Dominique, Michel, 77550 MOISSY-CRAMAYEL (FR); GHOSAROSSIAN-PRILLIEUX, Grégory, 77550 MOISSY-CRAMAYEL (FR); SEVI, Guillaume, 77550 MOISSY-CRAMAYEL (FR); SULTANA, Patrick, 77550 MOISSY-CRAMAYEL (FR); VIEILLEFOND, Guy, 77550 MOISSY-CRAMAYEL (FR)
(74) Mandataire: Gevers & Orès
(86) Numéro de dépôt international: PCT/FR2017/051167
(87) Numéro de publication internationale: WO 2017/203126

(56) Documents cités:
- US-A1- 2006 000 077
- US-A1- 2010 111 685
- US-A1- 2011 262 277
- US-A1- 2015 204 212

## Description

### DOMAINE TECHNIQUE

La présente invention concerne un carter, en particulier d'échappement, de turbomachine d'aéronef, et un procédé de fabrication d'un carter conformément au préambule des revendications 1 et 8.

### ETAT DE L'ART

L'état de l'art comprend notamment les documents US-A1-2010/111685, US-A1-2006/000077, US-A1-2015/204212 (représentant l'état de la technique le plus proche) et US-A1-2011/262277.

De façon connue, un carter d'échappement de turbomachine comprend un moyeu intérieur et une virole annulaire extérieure s'étendant autour du moyeu et d'un axe de révolution. La virole est configurée pour définir avec le moyeu une veine annulaire d'écoulement d'un flux de gaz et est reliée rigidement au moyeu par des bras sensiblement radiaux par rapport à l'axe précité.

Un carter d'échappement est monté en aval (par référence à l'écoulement des gaz dans la turbomachine) d'une turbine et le flux de gaz qui traverse le carter d'échappement est donc le flux de gaz de combustion sortant de la turbine.

Une turbomachine peut comprendre d'autres carters similaires tels qu'un carter intermédiaire. Un carter intermédiaire est intercalé entre un compresseur basse pression et un compresseur haute pression de la turbomachine, et est donc traversé par un flux de gaz de compresseur basse pression et destiné à alimenter le compresseur haute pression.

Ce type de carter peut comprendre à ses extrémités longitudinales des brides de fixation à d'autres organes de la turbomachine. Le moyeu du carter comporte par exemple à une extrémité longitudinale une bride annulaire festonnée comportant des parties pleines régulièrement réparties autour de l'axe de révolution et espacées les unes des autres par des parties creuses. Dans le cas d'un carter d'échappement, cette bride permet de relier le carter à un cône d'éjection de la turbomachine situé en aval.

Dans la technique actuelle, un tel carter est fabriqué par assemblage de plusieurs pièces. Le moyeu est réalisé d'une seule pièce et les bras et la virole, sectorisée ou non, sont rapportés et fixés sur le moyeu.

La présente invention propose notamment un perfectionnement à la 5 fabrication de ce type de carter.

### EXPOSE DE L'INVENTION

L'invention propose à cet effet un carter tel que défini dans la revendication 1.

L'invention propose une nouvelle façon de fabriquer un carter, en particulier d'échappement, non pas au moyen d'un moyeu initialement monobloc mais d'un moyeu sectorisé, c'est-à-dire formé par assemblage de secteurs. Ces secteurs de moyeu sont soudés, de préférence par faisceau d'électrons (FE), étant données les épaisseurs de matière des éléments à souder.

De par la géométrie du moyeu, lors de la phase d'assemblage, le faisceau d'électrons peut être amené à traverser plusieurs peaux simultanément - dans la zone de la bride précitée. Le soudage FE est alors appelé « triple-peaux », le faisceau pouvant traverser simultanément trois peaux à savoir la bride, un raidisseur annulaire du moyeu et la virole.

Le soudage FE est capable de cela mais la traversée d'épaisseurs multiples nécessite plus de puissance et entraîne moins de stabilité dans la qualité de soudure obtenue.

La conception de brides, telles que la bride précitée, doit prendre en compte plusieurs exigences fonctionnelles et de dimensionnement mécanique, ce qui se traduit par des épaisseurs de matière, un nombre de vis, un nombre et taille des festons ou parties creuses, conformes à des exigences de coûts et masses.

La solution proposée consiste en l'optimisation géométrique de la bride précitée pour permettre de faciliter la procédure de soudage du moyeu, notamment en limitant le nombre de peaux traversées.

Pour cela, l'épaisseur de la bride peut être augmentée pour permettre, à iso-capacité mécanique, d'élargir et d'approfondir les festons. Le positionnement angulaire des festons est optimisé pour que chaque zone de soudure entre deux secteurs de moyeu soit alignée avec un feston. Cette zone devient ainsi une zone de soudure « double-peau » (ou « mono-peau » si le faisceau d'électrons n'a pas besoin de traverser un raidisseur), ce qui permet de mieux maîtriser le soudage, en particulier FE.

Le carter selon l'invention peut comprendre une ou plusieurs des caractéristiques suivantes, prises isolément les unes des autres ou en combinaison les unes avec les autres :
- les secteurs de moyeu sont réalisés de fonderie,
- le nombre de secteurs de moyeu est égal au nombre de bras du carter,
- chaque secteur de moyeu est initialement formé d'une seule pièce avec une portion radialement interne d'un desdits bras,
- l'extrémité radialement externe de chacun desdits bras est soudée à l'extrémité radialement interne d'une portion radialement externe de ce bras,
- la portion radialement interne de chaque bras est sensiblement située entre deux parties pleines adjacentes; deux parties pleines de la bride se retrouvent ainsi situées sensiblement de part et d'autre du bras, ce qui garantit une bonne répartition des charges,
- la portion radialement interne de chaque bras est sensiblement située entre un premier plan longitudinal passant par l'axe A et une des parties pleines de ladite bride, et un second plan longitudinal passant par l'axe et une autre adjacente de ces parties pleines,
- la portion radialement interne de chaque bras est sensiblement située à mi-distance des deux parties pleines adjacentes,
- chaque bras comporte un intrados et un extrados, chaque cordon de soudure s'étendant entre l'intrados d'un premier bras et l'extrados d'un second bras adjacent et étant situé plus proche de l'extrados du second bras que de l'intrados du premier bras,
- lesdits bras s'étendent dans des plans sensiblement tangents à une circonférence centrée sur ledit axe, et
- les parties creuses comportent chacune un bord médian sensiblement rectiligne et tangent à une circonférence centrée sur l'axe A ; la position angulaire des festons ou parties creuses est ainsi optimisée pour que chaque zone de soudure entre deux secteurs de moyeu soit recouverte par un feston dans sa partie rectiligne.

La présente invention concerne également une turbomachine comportant au moins un carter tel que décrit ci-dessus, voir la revendication 8.

La présente invention concerne encore un procédé de fabrication d'un carter, en particulier d'échappement, pour une turbomachine, tel que défini dans la revendication 9.

De préférence, le soudage est réalisé par faisceau d'électrons. Les secteurs de moyeu peuvent être réalisés de fonderie, et comprennent chacun un secteur de bride.

Avantageusement, pour la réalisation de chaque cordon de soudure, le faisceau d'électrons est incliné par rapport audit axe, par exemple radialement vers l'extérieur depuis une extrémité longitudinal aval vers une extrémité longitudinal amont du carter, et est déplacé dans un plan sensiblement longitudinal passant par ledit axe et ledit cordon à réaliser sans traverser la matière de ladite bride.

Les parties creuses de la bride peuvent être soit pré-ébauchées avant assemblage du moyeu, soit usinées après assemblage. La partie qui sera ainsi réusinée (chute matière) pourra servir de « taquet » de soudure.

Cette solution permet d'améliorer la faisabilité, la stabilité et la qualité du procédé d'assemblage et donc son coût (car moins de retouche nécessaire) et permet ainsi la conception optimisée intégrée globale de la bride au moyeu.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demi vue schématique en coupe axiale d'une partie aval de turbomachine, et montre un carter d'échappement,
- la figure 2 est une vue schématique en perspective d'un carter d'échappement, vu de face depuis l'aval,
- la figure 3 est une vue schématique en perspective d'un carter d'échappement selon l'invention, et la figure 3a montre en perspective des secteurs de moyeu qui composent ce carter,
- la figure 4 est une vue schématique partielle en coupe axiale d'un carter d'échappement,
- les figures 5 et 6 sont des vues schématiques en perspective du carter de la figure 3, et montre une bride aval de ce carter, et
- la figure 7 est une vue schématique partielle en perspective du carter d'échappement de la figure 3.

### DESCRIPTION DETAILLEE

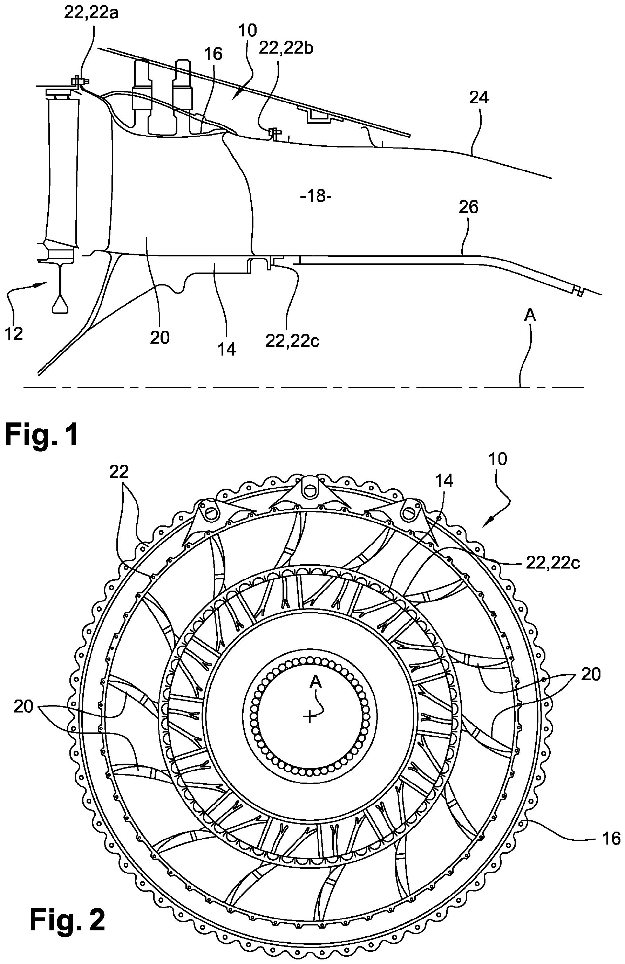

Les figures 1 et 2 représentent un carter 10, ici d'échappement, d'une turbomachine d'aéronef.

De façon classique, une turbomachine comprend un générateur de gaz comportant, d'amont en aval, dans le sens d'écoulement des flux de gaz, au moins un compresseur, une chambre de combustion, et au moins une turbine. En aval de la turbine 12 est situé le carter d'échappement 10 qui comprend pour l'essentiel un moyeu intérieur 14 et une virole annulaire extérieure 16 qui s'étend autour du moyeu et d'un axe A de révolution qui est l'axe longitudinal de la turbomachine. Dans la présente demande, les expressions « radiale » et « radialement » font référence à l'axe de révolution du moyeu ou du carter.

La virole 16 et le moyeu 14 définissent ensemble une veine annulaire 18 d'écoulement des gaz de combustion sortant de la turbine 12.

La virole 16 et le moyeu 14 sont reliées rigidement l'un à l'autre par des bras 20 sensiblement radiaux par rapport à l'axe A. Les bras 20 peuvent être inclinés par rapport à des plans passant par l'axe A. Avantageusement, les bras 20 s'étendent dans des plans sensiblement tangents à une circonférence centrée sur l'axe A, comme on peut l'apprécier à la figure 2.

Le carter 10 comporte des brides 22 de fixation à d'autres éléments de la turbomachine. Ces brides de fixation 22 sont situées aux extrémités longitudinales amont et aval du carter. Dans l'exemple représenté, la virole 16 comprend une bride annulaire 22a, 22b à chacune de ses extrémités longitudinales amont et aval. La bride amont 22a est fixée à une extrémité aval d'un carter de la turbine 12 et la bride aval 22b est fixée à une extrémité amont d'une tuyère d'échappement 24.

Le moyeu 14 comporte à son extrémité longitudinale aval une bride annulaire 22c de fixation à une extrémité amont d'un cône d'échappement 26 entouré par la tuyère 24.

La bride 22c est festonnée, c'est-à-dire qu'elle comprend des parties pleines régulièrement réparties autour de l'axe A et espacées les unes des autres par des parties creuses.

Dans la technique antérieure, le carter 10 est fabriqué en rapportant et en fixant la virole 16 et les bras 18 sur un moyeu 14 qui est monobloc et réalisé d'une seule pièce, en général de fonderie.

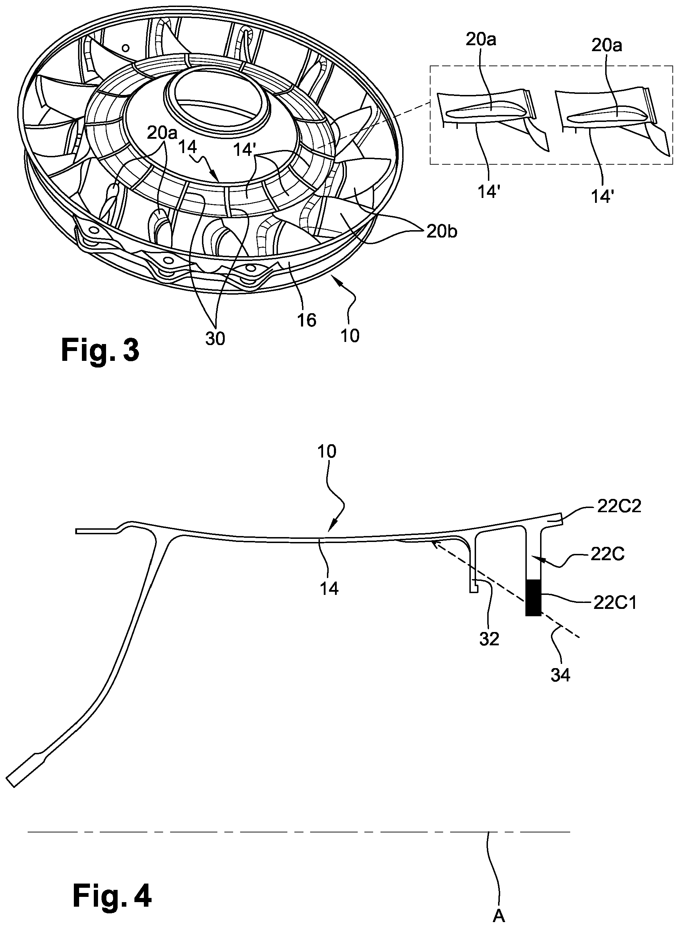

La figure 3 illustre un principe de l'invention consistant à fabriquer un tel carter à partir d'un moyeu 14 sectorisé et donc formé par l'assemblage de plusieurs secteurs de moyeu 14' disposés circonférentiellement bout à bout et fixés les uns aux autres par soudage, de préférence par faisceau d'électrons ou soudage FE.

La figure 3a montre des secteurs de moyeu 14' qui comportent chacun une portion radialement interne 20a d'un bras. Le nombre de secteurs 14' est ici égal au nombre de bras 20 et chaque secteur de moyeu 14' est associé à une portion radialement interne 20a d'un bras. Le secteur de moyeu 14' et la portion de bras 20a sont formés d'une seule pièce de fonderie. Des portions radialement externes 20b des bras sont alors rapportées et fixées sur les portions 20a, et la virole, sectorisée ou non, est également rapportée et fixée sur les portions 20b. La fixation des différentes parties du carter peut être réalisée par soudage, de préférence FE.

Dans le cas d'un soudage FE et tel que représenté aux figures 3 et 4, chaque secteur de moyeu 14' est relié à un secteur de moyeu adjacent par un cordon longitudinal de soudure 30 qui s'étend sur sensiblement toute l'étendue axiale du moyeu.

Pour la réalisation de chaque cordon de soudure, le faisceau d'électrons est incliné par rapport à l'axe A, par exemple radialement vers l'extérieur depuis une extrémité longitudinale aval vers une extrémité longitudinale amont du carter, et est déplacé dans un plan sensiblement longitudinal passant par l'axe et le cordon à réaliser et qui correspond au plan de la feuille du dessin de la figure 4.

La référence 34 à la figure 4 désigne le faisceau d'électrons. Il est orienté vers la zone à souder c'est-à-dire au niveau de la zone de jonction entre deux bords longitudinaux en regard de deux secteurs de moyeu adjacents. Le faisceau 34 traverse ici successivement trois peaux ou parois, à savoir les bords à souder, un raidisseur annulaire interne 32 du moyeu, et la bride 22c. En effet, les parties pleines 22c1 de la bride 22c sont situées sur la trajectoire du faisceau et sont donc traverser par ce dernier. Ce n'est pas le cas des parties creuses 22c2. Ce cas particulier est naturellement lié à l'angle d'inclinaison du faisceau d'électrons vis-à-vis de l'axe A, mais cet angle peut être imposé par la forme générale du carter.

Comme évoqué dans ce qui précède, le soudage FE est capable de traverser plusieurs peaux mais cela nécessite plus de puissance et entraîne moins de stabilité dans la qualité de soudure obtenue.

L'invention permet de remédier à ce problème grâce à l'alignement axial du cordon de soudure 30 entre deux secteurs de moyeu 14' avec une partie creuse 22c2 de la bride festonnée 22c.

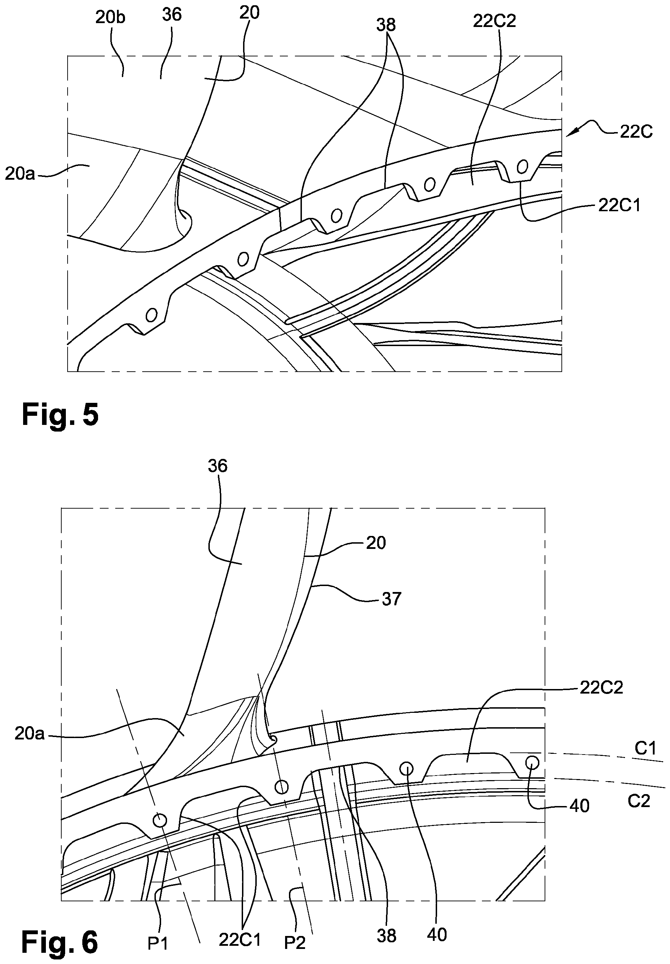

Les figures 5 à 7 permettent d'illustrer l'invention.

On constate dans ces figures que la portion radialement interne 20a de chaque bras 20 est sensiblement située entre un premier plan longitudinal P1 passant par l'axe A et une des parties pleines 22c1de la bride, et un second plan longitudinal P2 passant par l'axe A et une autre adjacente 22c1 de ces parties pleines. Les parties pleines 22c1 sont situées à mi-distance de la portion 20a du bras. Autrement dit, les parties pleines sont placées symétriquement de part et d'autre de cette portion du bras.

Chaque bras 20 comporte un intrados 36 et un extrados 37. Chaque cordon de soudure 30 s'étend entre l'intrados d'un premier bras et l'extrados d'un second bras adjacent et est situé plus proche de l'extrados du second bras que de l'intrados du premier bras dans l'exemple représenté.

Les parties creuses 22c2 de la bride 22c comportent chacune un bord médian 38 sensiblement rectiligne et tangent à une circonférence C1 centrée sur l'axe A. Les parties pleines 22c1 comprennent également chacune un bord médian sensiblement rectiligne et tangent à une circonférence C2 centrée sur l'axe A. Ces parties pleines 22c1 sont en outre percées d'orifices 40 de passage de moyens du type vis-écrou.

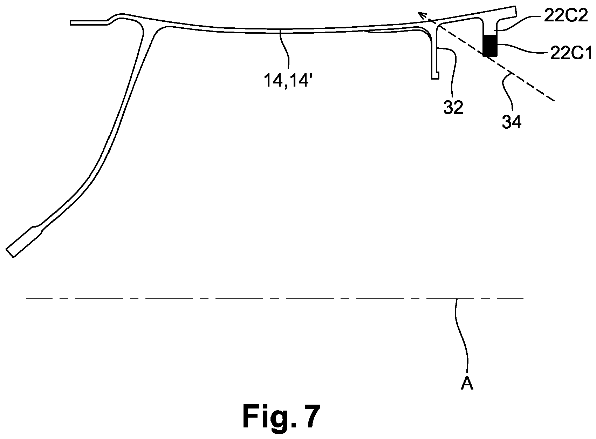

La figure 7 illustre le passage du faisceau d'électrons 34 au niveau de la zone de la bride 22c. On constate que, du fait de l'alignement axial de la zone à souder avec une partie creuse 22c2 de la bride 22c, voire également du redimensionnement de la bride en particulier en épaisseur et/ou en dimension radiale, le faisceau ne traverse pas la bride 22c. Le soudage peut ainsi être du type double peau si le faisceau doit traverser le raidisseur 32, ce qui est le cas dans l'exemple représenté.

## Revendications

1. Carter (10), en particulier d'échappement, pour une turbomachine, comprenant un moyeu intérieur (14) ayant un axe (A) de révolution et une virole annulaire extérieure (16) s'étendant autour du moyeu, ladite virole étant configurée pour définir avec le moyeu une veine annulaire (18) d'écoulement d'un flux de gaz et étant reliée rigidement au moyeu par des bras (20), le moyeu comportant à une extrémité longitudinale une bride annulaire (22) festonnée comportant des parties pleines (22c1) régulièrement réparties autour dudit axe et espacées les unes des autres par des parties creuses (22c2), **caractérisé en ce que** le moyeu (14) est réalisé par assemblage par soudage de plusieurs secteurs (14') angulaires de moyeu (14) qui sont disposés circonférentiellement bout à bout autour dudit axe (A), chaque secteur (14') étant relié à un secteur de moyeu (14') adjacent par un cordon longitudinal de soudure (30) qui s'étend sur toute l'étendue axiale du moyeu (14) et qui est aligné axialement avec une partie creuse (22c2) de la bride festonnée (22c).

2. Carter (10) selon la revendication précédente, dans lequel le nombre de secteurs de moyeu (14') est égal au nombre de bras (20) du carter (10).

3. Carter (10) selon la revendication précédente, dans lequel chaque secteur de moyeu (14') est initialement formé d'une seule pièce avec une portion radialement interne (20a) d'un desdits bras (20).

4. Carter (10) selon la revendication précédente, dans lequel la portion radialement interne (20a) de chaque bras (20) est sensiblement située entre deux parties pleines (22c1) adjacentes.

5. Carter (10) selon l'une des revendications précédentes, dans lequel chaque bras (20) comporte un intrados (36) et un extrados (37), chaque cordon de soudure (30) s'étendant entre l'intrados d'un premier bras et l'extrados d'un second bras adjacent et étant situé plus proche de l'extrados du second bras que de l'intrados du premier bras.

6. Carter (10) selon l'une des revendications précédentes, dans lequel les parties creuses (22c2) comportent chacune un bord médian (38) sensiblement rectiligne et tangent à une circonférence centrée sur l'axe A.

7. Carter (10) selon l'une des revendications précédentes, dans lequel lesdits bras (20) s'étendent dans des plans sensiblement tangents à une circonférence centrée sur ledit axe (A).

8. Turbomachine, en particulier d'aéronef, comportant au moins un carter (10) selon l'une des revendications précédentes.

9. Procédé de fabrication d'un carter(10), en particulier d'échappement, pour une turbomachine, ce carter comprenant un moyeu intérieur (14) et une virole annulaire extérieure (16) s'étendant autour du moyeu et d'un axe A de révolution, ladite virole étant configurée pour définir avec le moyeu une veine annulaire (18) d'écoulement d'un flux de gaz et étant reliée rigidement au moyeu par des bras (20), le moyeu comportant à une extrémité longitudinale une bride annulaire (22) festonnée comportant des parties pleines (22c1) régulièrement réparties autour dudit axe et espacées les unes des autres par des parties creuses (22c2), **caractérisé en ce qu'**il comprend une étape consistant à assembler par soudage plusieurs secteurs angulaires de moyeu (14') qui sont disposés circonférentiellement bout à bout autour dudit axe (A) par création d'un cordon longitudinal de soudure (30), de manière à ce que chaque secteur de moyeu (14') est relié à un secteur de moyeu (14') adjacent par le cordon longitudinal de soudure (30) qui s'étend sur toute l'étendue axiale du moyeu (14) et qui est aligné axialement avec une partie creuse (22c2) de la bride festonnée (22c).

10. Procédé selon la revendication précédente, dans lequel le soudage est réalisé par faisceau d'électrons (34).

11. Procédé selon la revendication précédente, dans lequel, pour la réalisation de chaque cordon de soudure (30), le faisceau d'électrons (34) est incliné par rapport audit axe, par exemple radialement vers l'extérieur depuis une extrémité longitudinale aval vers une extrémité longitudinale amont du carter (10), et est déplacé dans un plan sensiblement longitudinal passant par ledit axe
(A) et ledit cordon (30) à réaliser sans traverser la matière de ladite bride festonnée (22c).

## Patentansprüche

1. Gehäuse (10), insbesondere eines Abgas, für eine Turbomaschine, umfassend eine innere Nabe (14), die eine Drehachse (A) aufweist, und eine äußere ringförmige Halterung (16), die sich um die Nabe erstreckt, wobei die Halterung konfiguriert ist, um mit der Nabe einen ringförmigen Ablaufstrom (18) einer Gasströmung zu definieren und über Arme (20) starr mit der Nabe verbunden ist, wobei die Nabe an einem Längsende einen gesäumten ringförmigen Flansch (22) beinhaltet, der volle Teile (22c1) beinhaltet, die regelmäßig um die Achse verteilt sind und durch hohle Teile (22c2) voneinander beabstandet sind, **dadurch gekennzeichnet, dass** die Nabe (14) durch Zusammenfügen durch Schweißen mehrerer Winkelsektoren (14') einer Nabe (14) realisiert wird, die um die Achse (A) umfänglich aneinander angeordnet sind, wobei jeder Sektor (14') über eine Längsschweißraupe (30), die sich um die gesamte axiale Erstreckung der Nabe (14) erstreckt und die mit einem hohlen Teil (22c2) des sich gesäumten Flansches (22c) axial ausgerichtet ist, mit einem angrenzenden Nabensektor (14') verbunden ist.

2. Gehäuse (10) nach dem vorstehenden Anspruch, wobei die Anzahl an Nabensektoren (14') gleich der Anzahl an Armen (20) des Gehäuses (10) ist.

3. Gehäuse (10) nach dem vorstehenden Anspruch, wobei jeder Nabensektor (14') anfänglich aus einem einzigen Stück mit einem radial inneren Abschnitt (20a) eines der Arme (20) gebildet ist.

4. Gehäuse (10) nach dem vorstehenden Anspruch, wobei der radial innere Abschnitt (20a) jedes Arms (20) im Wesentlichen zwischen zwei angrenzenden vollen Teilen (22c1) liegt.

5. Gehäuse (10) nach einem der vorstehenden Ansprüche, wobei jeder Arm (20) eine innere Wölbfläche (36) und eine äußere Wölbfläche (37) beinhaltet, wobei sich jede Schweißraupe (30) zwischen der inneren Wölbfläche eines ersten Arms und einer äußeren Wölbfläche eines angrenzenden zweiten Arms erstreckt und näher an der äußeren Wölbfläche des zweiten Arms als an der inneren Wölbfläche des ersten Arms liegt.

6. Gehäuse (10) nach einem der vorstehenden Ansprüche, wobei die hohlen Teile (22c2) jeweils einen mittleren Rand (38) beinhalten, der im Wesentlichen geradlinig und tangential zu einem auf der Achse A zentrierten Umfang ist.

7. Gehäuse (10) nach einem der vorstehenden Ansprüche, wobei sich die Arme (20) in Ebenen erstrecken, die im Wesentlichen tangential zu einem auf der Achse (A) zentrierten Umfang sind.

8. Turbomaschine, insbesondere eines Luftfahrzeugs, die mindestens ein Gehäuse (10) nach einem der vorstehenden Ansprüche beinhaltet.

9. Verfahren zur Herstellung eines Gehäuses (10), insbesondere eines Abgas, für eine Turbomaschine, wobei dieses Gehäuse eine innere Nabe (14) und eine äußere ringförmige Halterung (16), die sich um die Nabe und um eine Drehachse A erstreckt, umfasst, wobei die Halterung konfiguriert ist, um mit der Nabe einen ringförmigen Ablaufstrom (18) einer Gasströmung zu definieren und über Arme (20) starr mit der Nabe verbunden ist, wobei die Nabe an einem Längsende einen gesäumten ringförmigen Flansch (22) beinhaltet, der volle Teile (22c1) beinhaltet, die regelmäßig um die Achse verteilt sind und durch hohle Teile (22c2) voneinander beabstandet sind, **dadurch gekennzeichnet, dass** es einen Schritt umfasst, der aus einem Zusammenfügen durch Schweißen mehrerer Nabenwinkelsektoren (14') besteht, die um die Achse (A) umfänglich aneinander angeordnet sind, durch Schaffen einer Längsschweißraupe (30) derart, dass jeder Nabensektor (14') mit einem angrenzenden Nabensektor (14') über die Längsschweißraupe (30), die sich über die gesamte axiale Erstreckung der Nabe (14) erstreckt und die mit einem hohlen Teil (22c2) des gesäumten Flansches (22c) axial ausgerichtet ist, verbunden wird.

10. Verfahren nach dem vorstehenden Anspruch, wobei das Schweißen durch Elektronenstrahlen (34) realisiert wird.

11. Verfahren nach dem vorstehenden Anspruch, wobei für die Realisierung jeder Schweißraupe (30) der Elektronenstrahl (34) in Bezug auf die Achse geneigt wird, zum Beispiel radial nach außen von einem stromabwärtigen Längsende zu einem stromaufwärtigen Ende des Gehäuses (10), und in einer im Wesentlichen in Längsrichtung verlaufenden Ebene, die durch die Achse (A) und die zu realisierende Raupe (30) verläuft, verlagert wird, ohne das Material des gesäumten Flansches (22c) zu durchdringen.

## Claims

1. A casing (10), in particular an exhaust casing, for a turbomachine, comprising an inner hub (14) having an axis (A) of revolution and an outer annular shell (16) extending around the hub, said shell being configured to define with the hub an annular flow duct (18) of a gas stream and being rigidly connected to the hub by arms (20), the hub comprising at one longitudinal end, a scalloped annular flange (22) comprising solid portions (22c1) distributed at regular intervals around said axis and spaced apart from each other by hollow portions (22c2), **characterized in that** the hub (14) is produced by assembling by welding several angular sectors (14') of hub (14) which are arranged circumferentially end to end around said axis (A),
each sector (14') being connected to an adjacent hub sector (14') by a longitudinal weld bead (30) which extends over the entire axial extent of the hub (14) and which is axially aligned with a hollow portion (22c2) of the scalloped flange (22c).

2. A casing (10) according to the preceding claim, wherein the number of hub sectors (14') is equal to the number of arms (20) of the casing (10).

3. A casing (10) according to the preceding claim, wherein each hub sector (14') is initially integrally formed with a radially inner portion (20a) of one of said arms (20).

4. A casing (10) according to the preceding claim, wherein the radially inner portion (20a) of each arm (20) is substantially located between two adjacent solid portions (22c1).

5. A casing (10) according to any one of the preceding claims, wherein each arm (20) comprises a pressure side (36) and a suction side (37), each weld bead (30) extending between the pressure side of a first arm and the suction side of an adjacent second arm and being located closer to the suction side of the second arm than to the pressure side of the first arm.

6. A casing (10) according to any one of the preceding claims, wherein the hollow portions (22c2) each comprise a middle edge (38) substantially straight and tangent to a circumference centred on the axis A.

7. A casing (10) according to any one of the preceding claims, wherein said arms (20) extend in planes substantially tangent to a circumference centred on said axis (A).

8. A turbomachine, in particular for aircraft, comprising at least one casing (10) according to any one of the preceding claims.

9. A method of manufacturing a casing (10), in particular an exhaust casing, for a turbomachine, said casing comprising an inner hub (14) and an outer annular shell (16) extending around the hub and an axis A of revolution, said shell being configured to define with the hub an annular flow duct (18) of a gas stream and being rigidly connected to the hub by arms (20), the hub comprising at one longitudinal end a scalloped annular flange (22) comprising solid portions (22c1) distributed at regular intervals around said axis and spaced apart from one another by hollow portions (22c2), **characterized in that** it comprises a step consisting of assembling, by welding, several angular hub sectors (14') which are arranged circumferentially end to end around said axis (A) by creating a longitudinal weld bead (30), so that each hub sector (14') is connected to an adjacent hub sector (14') by the longitudinal weld bead (30) which extends over the entire axial extent of the hub (14) and which is axially aligned with a hollow portion (22c2) of the scalloped flange (22c).

10. The method according to the preceding claim, wherein the welding is produced by means of an electron beam (34).

11. The method according to the preceding claim, wherein, for the production of each weld bead (30), the electron beam (34) is inclined with respect to said axis, for example radially outwards from a downstream longitudinal end to an upstream longitudinal end of the casing (10),
and is displaced in a substantially longitudinal plane passing through said axis (A) and said bead (30) to be produced without passing through the material of said scalloped flange (22c).
